# EUROPEAN PATENT APPLICATION

(11) **EP 2 521 420 A1**
(43) Date of publication of application: **07.11.2012**
(21) Application number: 10840998.8
(22) Date of filing: 27.12.2010
(51) Int. Cl.: H04W 88/10, H04M 1/733, H04W 24/00, H04W 92/12

(54) **WIRELESS DEVICE COMMON USE DEVICE**

(30) Priority: 28.12.2009 JP 2009298417
(71) Applicant: NTT DoCoMo, Inc., Tokyo 100-6150 (JP)
(72) Inventor: MOTEGI, Masayuki, Tokyo 100-6150 (JP); SHIMAZU, Yoshitsugu, Tokyo 100-6150 (JP); OYANE, Hidehiko, Tokyo 100-6150 (JP); YAMAMOTO, Tsuyoshi, Tokyo 100-6150 (JP)
(74) Representative: HOFFMANN EITLE
(86) International application number: PCT/JP2010/073584
(87) International publication number: WO 2011/081142

(57) **Abstract**

In a BRE300, an RF interface for transmitting and receiving an RF signal is used for communication with a MDE 200 and a digital signal interface for transmitting and receiving a digital signal in accordance with CPRI is used for communication with BDE 300. The BRE 300 includes a monitoring signal interface configured to notify the MDE 200 of a monitoring signal indicating a state of the radio unit 50. The signal transmitted and received through the monitoring signal interface is a ground signal and is of type different from types of signals transmitted and received by the RF interface and the digital signal interface.

## Description

### TECHNICAL FIELD

The present invention relates to a radio equipment device sharing device that allows a radio equipment (RE) device to be shared by a plurality of monitoring controllers (REC).

### BACKGROUND ART

Recently, Common Public Radio Interface (CPRI) has been specified as the standard interface specification between a radio equipment (RE) device that transmits and receives a radio signal to and from a mobile station and a monitoring controller (REC: Radio Equipment Control) that controls the radio equipment device and does the like (see, Non-Patent Document 1, for example).

In accordance with the interface specification, compatibility can be secured for allowing an RE and an REC manufactured by different vendors to be easily connected to each other.

In terms of mobile communication systems, a transition period to a new radio communication method includes a period where there are both of a system based on a conventional radio communication method, e.g., a third generation mobile communication system (hereinafter, 3G) defined by 3GPP, and a system based on the new radio communication method, e. g. , a Long Term Evolution (hereinafter, LTE) defined by the 3GPP.

Here, while an RE can be used in both 3G and LTE, an REC is dedicated to each system. Thus, an RE/REC system supporting the 3G and an RE/REC system supporting the LTE need to be prepared to connect the RE and the REC in accordance with the CPRI. Therefore, there arises a problem that the RE cannot be efficiently used.

To address this, studies have been made on a radio base station system including a radio equipment device sharing device (BRE: Base station Radio processing Equipment) provided between an RE and multiple RECs respectively supporting the systems, and configured to allow the multiple RECs to share the RE. A conventional system based on a conventional radio communication system (3G) does not necessarily support the CPRI. For this reason, when such a radio equipment device sharing device is provided, information transmitted and received by a user (mobile station) may be modulated into a signal (hereinafter, RF signal) in a radio frequency band (RF band) and then is transmitted and received between the REC (MDE: Modulation and Demodulation Equipment) for the 3G and the radio equipment device sharing device in some cases. On the other hand, a digital signal in accordance with the CPRI is transmitted and received between the REC (BDE: Base station Digital processing Equipment) for the LTE and the radio equipment device sharing device.

### PRIOR ART DOCUMENTS

### NON-PATENT DOCUMENTS

NON-PATENT DOCUMENT 1: CPRI Specification V4.0, [online], June 30th, 2008 [searched on April 1st, 2008], Internet <URL: http://www.cpri.info/downloads/CPRI_v_4_0_2008-06-30.pdf>

### SUMMARY OF THE INVENTION

However, the above-described radio equipment device sharing device has the following problem. Specifically, a signal transmitted and received between the REC (MDE) for the 3G and the radio equipment device sharing device is an RF signal and failure information of the RE (e.g., sector failure) is difficult to multiplex on the RF signal. Thus, there is a problem that the failure information cannot be notified to the MDE.

Accordingly, an objective of the present invention is to provide a radio equipment device sharing device capable of allowing plural monitoring controllers (RECs) in different communication systems to monitor the state of a radio equipment (RE) device even in a case where the radio equipment (RE) device is shared by the RECs, and where the radio equipment device sharing device transmits and receives, to and from one of the RECs, a digital signal in accordance with a standardized interface specification for connecting the RE and the REC, and transmits and receives an RF signal to and from another one of the RECs.

The present invention has the following features to solve the problems described above. The first feature of the present invention is summarized in that a radio equipment device sharing device (BRE 30) comprising a radio unit (radio unit 50) configured to transmit and receive a radio signal (radio signal RS) to and from a mobile station (mobile station 20), wherein the radio equipment device sharing device is connected to: a first monitoring controller (MDE 200) configured to monitor and control the radio unit in accordance with a first radio communication system (3G); and a second monitoring controller (BDE 300) configured to monitor and control the radio unit in accordance with a second radio communication system (LTE) different from the first radio communication system, an RF interface (RF-INF103) for transmitting and receiving an RF signal that is a signal in a radio frequency band is used for communication between the radio equipment device sharing device and the first monitoring controller, whereas a digital signal interface (TRX-INF105) for transmitting and receiving a digital signal in accordance with a standardized interface specification for connecting a radio equipment device (CPRI) and the second monitoring controller is used for communication between the radio equipment device sharing device and the second monitoring controller, the radio equipment device sharing device relays the RF signal transmitted and to be received by the first monitoring controller and the digital signal transmitted and to be received by the second monitoring controller, the radio equipment device sharing device includes a monitoring signal interface (PORT-INF110) configured to notify the first monitoring controller of a monitoring signal indicating a state of the radio unit, and the signal transmitted and received through the monitoring signal interface is of a type different from types of signals transmitted and received by the RF interface and the digital signal interface.

The second feature is according to the first feature and is summarized in that the signal transmitted and received through the monitoring signal interface is a ground signal.

The Third feature is according to the first feature and is summarized in that a radio frequency band used in the first radio communication system overlaps with a radio frequency band used in the second radio communication method.

The fourth feature is according to the first feature and is summarized in that the monitoring signal is a signal indicating a state of a sector formed by the radio unit.

### BRIEF DESCRIPTION OF THE DRAWINGS

[Fig. 1] Fig. 1 is an overall schematic configurational view of a radio base station system 10 according to an embodiment of the present invention.
[Fig. 2] Fig. 2 is a configuration diagram of functional blocks of a BRE 30 according to the embodiment of the present invention.
[Fig. 3] Fig. 3 is a configurational view of a PORT-INF 110 according to the embodiment of the present invention.
[Fig. 4] Fig. 4 is a diagram showing an example of an operation for acquiring a state of a radio unit 50 performed between the BRE 30 and a BDE 300 according to the embodiment of the present invention.
[Fig. 5] Fig. 5 is a diagram showing a table defining notification operations of sector states performed between the BRE 30 and an MDE 200 according to the embodiment of the present invention.

### MODES FOR CARRYING OUT THE INVENTION

Next, an embodiment of the present invention is described. Specifically, descriptions are given on (1) Overall Schematic Configuration of Radio Base Station System, (2) Functional Block Configuration of Radio Equipment Device Sharing Device, (3) Configuration of Monitoring Signal Interface, (4) Operation of Radio Equipment Device Sharing Device, (5) Advantageous Effect, and (6) Other Embodiment.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Radio Base Station System

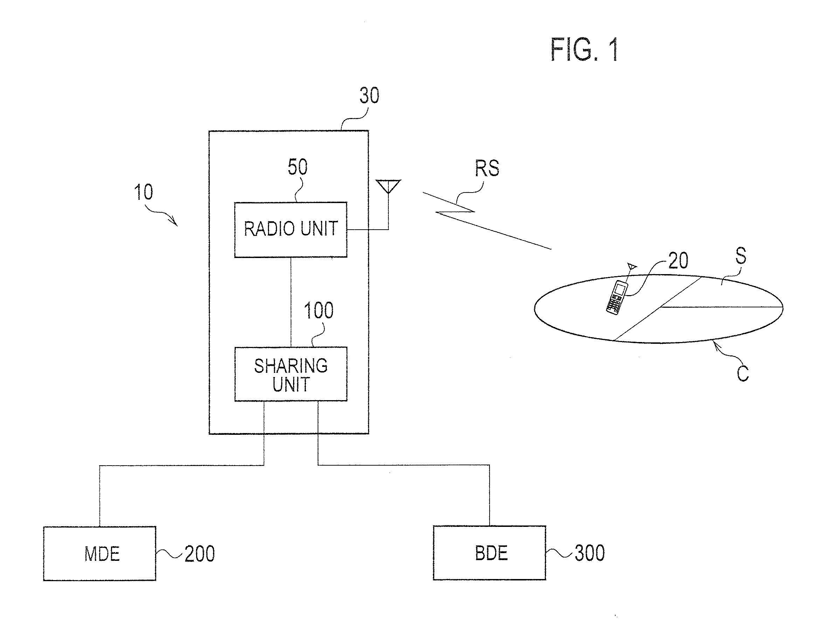

Fig. 1 is an overall schematic configurational view of a radio base station system 10 according to this embodiment. As shown in Fig. 1, the radio base station system 10 includes a BRE 30, an MDE 200, and a BDE 300.

The BRE 30 includes a radio unit 50 and a sharing unit 100. The radio unit 50 transmits and receives a radio signal RS in a predetermined radio frequency band to and from a mobile station 20. Specifically, the radio unit 50 includes a plurality of radio transmission and reception units (OA-RA: Open Air Receiver Amplifier) and forms a cover area C in which the mobile station 20 can perform radio communications with the radio unit 50. The cover area C includes a plurality of sectors S (sector 1 to sector 6 in this embodiment).

The sharing unit 100 is connected to the radio unit 50. The sharing unit 100 is connected to the MDE 200 and the BDE 300. The sharing unit 100 relays a signal (hereinafter RF signal) in a radio frequency band transmitted and received by the MDE 200. The sharing unit 100 relays a digital signal in accordance with CPRI transmitted and received by the BDE 300. In this embodiment, the BRE 30 forms a radio equipment device sharing device. The RF signal transmitted and received by the MDE 200 and the digital signal transmitted and received by the BDE 300 include information transmitted and received by a user (mobile station 20) and the like.

In this embodiment, the BRE 30 functions as a Radio Equipment (RE) device defined by the Common Public Radio Interface (CPRI) for the BDE 300.

The MDE 200 is a monitoring controller for a third generation mobile communication system (3G) defined by 3GPP and monitors and controls the radio unit 50. In this embodiment, the MDE 200 forms a first monitoring controller that monitors the radio unit 50 in accordance with a first radio communication system (3G). The radio unit 50 transmits and receives a radio signal RS based on the control by the MDE 200.

The BDE 300 is a monitoring controller for a Long Term Evolution (LTE) defined by the 3GPP and monitors and controls the radio unit 50. In this embodiment, the BDE 300 forms a second monitoring controller that monitors the radio unit 50 in accordance with a second radio communication system (LTE) different from the first radio communication system. The BDE 300 functions as the Radio Equipment Control (REC) defined by the CPRI.

In this embodiment, a radio frequency band (e.g., 2 GHz band) used in the 3G overlaps with a radio frequency band used in the LTE.

### (2) Functional Block Configuration of Radio Equipment Device Sharing Device

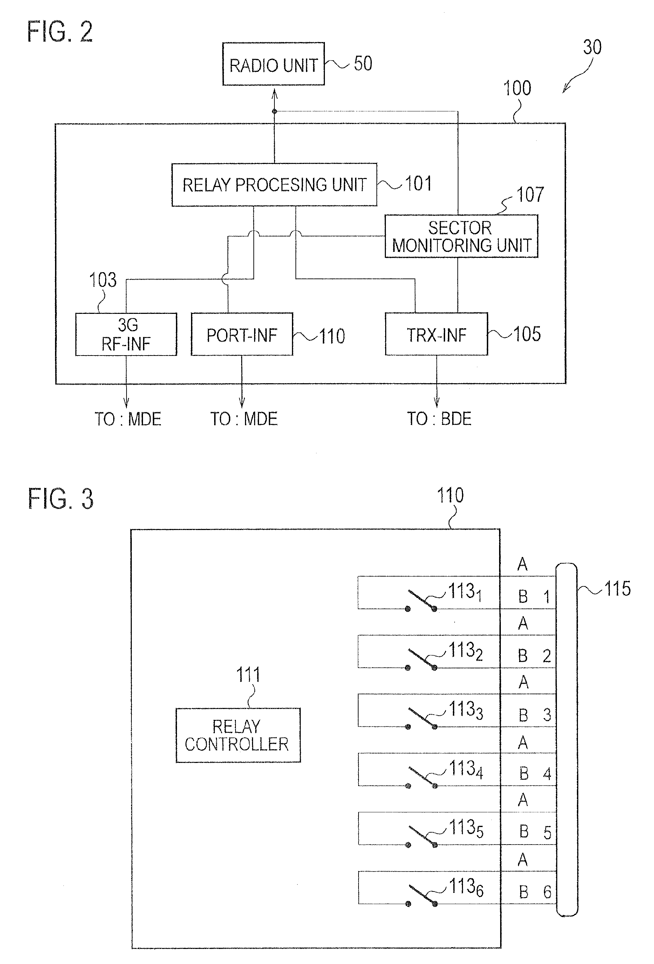

Fig. 2 is a configurational diagram of functional blocks of the BRE 30 forming the radio equipment device sharing device in this embodiment. As shown in Fig. 2, the BRE 30 includes the radio unit 50, a relay processing unit 101, a 3G RF-INF 103, a TRX-IF 105, a sector monitoring unit 107, and a PORT-INF 110.

The relay processing unit 101 relays an RF signal transmitted and received by the MDE 200 and a digital signal transmitted and received by the BDE 300.

Specifically, the relay processing unit 101 relays the RF signal to the radio unit 50 received from the MDE 200 through the 3G RF-INF 103. Similarly, the relay processing unit 101 relays the RF signal addressed to the MDE 200 and received from the radio unit 50 to the MDE 200.

The relay processing unit 101 converts the digital signal received from the BDE 300 through the TRX-IF 105 into the RF signal and relays the signal to the radio unit 50. Similarly, the relay processing unit 101 converts the RF signal addressed to the BDE 300 received from the radio unit 50 into the digital signal and relays the signal to the BDE 300.

The 3G RF-INF 103 is an interface for transmitting and receiving an RF signal that is a signal in a radio frequency band to and from the MDE 200. In this embodiment, the 3G RF-INF 103 forms an RF interface. A coaxial cable and the like through which the RF signal can be transmitted is connected to the 3G RF-INF 103.

The TRX-IF 105 is an interface for transmitting and receiving a digital signal in accordance with the CPRI to and from the BDE 300. In this embodiment, the TRX-IF 105 forms a digital signal interface. An optical cable through which the digital signal can be transmitted is connected to the TRX-IF 105.

The sector monitoring unit 107 monitors a state of a sector S (see Fig. 1) in the cover area C formed by the radio unit 50. Specifically, the sector monitoring unit 107 acquires a signal indicating a state of a plurality of radio transmission and reception units (OA-RA) included in the radio unit 50. The radio transmission and reception units respectively correspond to the sectors (sector 1 to sector 6 in this embodiment).

The sector monitoring unit 107 outputs to the TRX-IF 105 and the PORT-INF 110, the acquired state of each of the radio transmission and reception unit as a state (normal or failed) of each of the sectors. The state of each of the sectors inputted to the TRX-IF 105 is notified to the BDE 300 by using C&M Plane Data Channels (see CPRI Specification V4.0 Section 4.2.7.7). Meanwhile, the state of each of the sectors inputted to the PORT-INF 110 is notified to the MDE 200 as a ground signal.

The PORT-INF 110 is an interface for notifying the MDE 200 of a monitoring signal indicating a state of the radio unit 50, specifically, the signal indicating the state of each of the sectors. In this embodiment, the PORT-INF 110 forms a monitoring signal interface.

In this embodiment, a signal transmitted and received through the PORT-INF 110 is a ground signal. Here, the "ground signal" includes switching a relay contact between close (loop) and open or between a grounded state and opened state based on the state (normal or failed) of the sector. Alternatively, the "ground signal" may that for performing switching between a state where a predetermined voltage is applied and the opened state based on the state of the sector.

That is, the signal transmitted and received through the PORT-INF 110 is of a type different from those of signals transmitted and received by the 3G RF-INF 103 (RF interface) and the TRX-IF 105 (digital signal interface).

### (3) Configuration of Monitoring Signal interface

Fig. 3 is a configurational view of the PORT-INF 110 forming the monitoring signal interface in this embodiment. As shown in Fig. 3, the PORT-INF 110 includes a relay control unit 111, relays 113₁ to 113₆, and a connector 115.

The relay controller 111 controls the relays 113₁ to 113₆ based on the states of the sectors outputted from the sector monitoring unit 107. Specifically, the relay control unit 111 performs the following control. When the state of a sector is normal, a relay corresponding thereto is turned to a closed state (ON) whereas when a sector is in failure, a relay corresponding thereto is turned to an opened state (OFF).

The relay 113₁ corresponds to the sector 1. Similarly, the relays 113₂ to 113₆ correspond to the sector 2 to sector 6, respectively.

The connector 115 is used for the connection to terminals (A, B) of the relays 113₁ to 113₆. A cable including equal to or more than six pairs of core wires connecting the MDE 200 and the PORT-INF 110 is connected to the connector 115.

This embodiment is configured in such a manner that when a relay is closed, current flows through a circuit (not shown) connected to the relay.

### (4) Operation of Radio Equipment Device Sharing Device

Next, an operation of the BRE 30 forming the radio equipment device sharing device will be described. Specifically, descriptions are given on (4.1) Operation for Acquiring State of Radio Unit 50 Performed between BRE 30 and BDE 300, and (4.2) Operation for Notifying Sector State Performed between BRE 30 and MDE 200.

### (4.1) Operation for Acquiring State of Radio Unit 50 Performed between BRE 30 and BDE 300

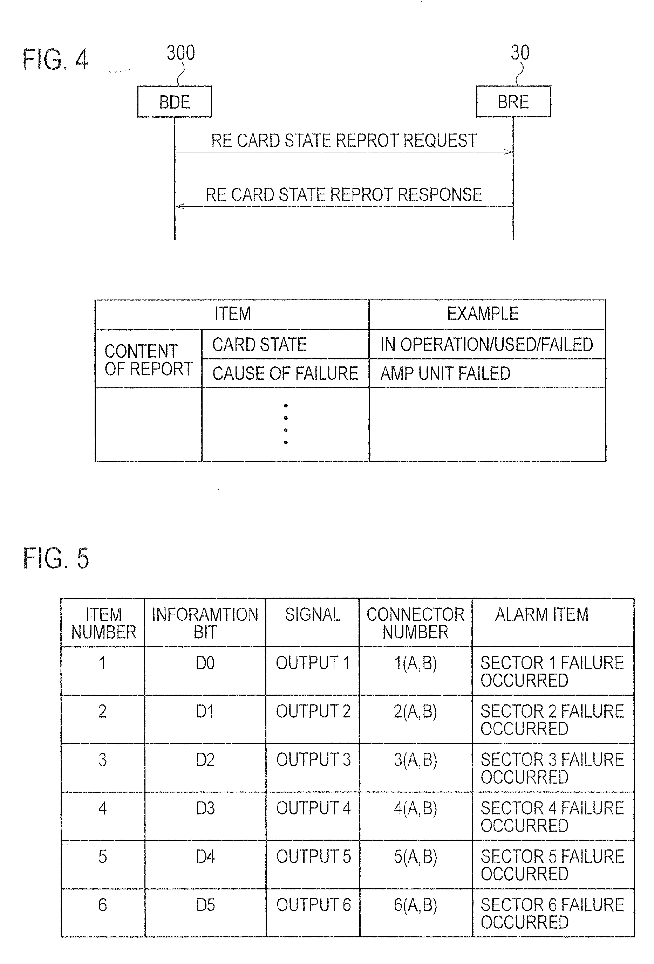

Fig. 4 shows an example of an operation for obtaining the state of the radio unit 50 performed between the BRE 30 and the BDE 300. As shown in Fig. 4, the BDE 300 transmits to the BRE 30, a state report request for an RE card (not shown) installed in the radio unit 50.

The BRE 30 transmits a state report response for the RE card to the BDE 300 based on the state report request received from the BDE 300. As described above, the state repot request and the state report response are executed using the C&M Plane Data in accordance with the CPRI Specification.

As shown in Fig. 4, the state report response includes a state of each RE card (in operation/used/failed) and a cause of failure.

### (4. 2) Operation for Notifying Sector State Performed between BRE 30 and MDE 200

Fig. 5 shows a table defining operations for notifying sector states performed between the BRE 30 and the MDE 200. Connector numbers (1 to 6) shown in Fig. 5 respectively correspond to the relays 113₁ to 113₆ (see Fig. 3). For example, the connector number 1 (the relay 113₁) is used for failure notification for the sector 1. Similarly, the connector numbers 2 to 6 (113₂ to 113₆) are used for failure notification for the sector 2 to the sector 6, respectively.

### (5) Advantageous Effect

With the BRE 30, the state of the BRE 30 can be notified to the MDE 200 even when the BRE 30 and the MDE 200 are connected with each other through an RF interface (3G RF-INF 103) for transmitting and receiving an RF signal generated through a modulation of user information because a monitoring signal interface (PORT-INF 110) using a ground signal is provided. Thus, the failure of the BRE 30 can be addressed promptly. Accordingly, effect of the failure on the provision of a service can be minimized.

According to the BRE 30, a monitoring signal interface using a widely used ground signal is used. Thus, the state of the BRE 30 can be notified to the MDE 200 without upgrading the MDE 200. Moreover, the BRE 30 allows the BDE 300 to perform state monitoring of the BRE 30 in accordance with the CPRI.

Specifically, with the BRE 30, a plurality of monitoring controllers (MDE 200 and BDE 300) in different radio communication systems to monitor the state of the radio unit 50 (RE) even in a case where the radio unit 50 is shared by the monitoring controllers, and where the radio unit 50 transmits and receives, to and from one of the monitoring controllers (BDE 300), the digital signal in accordance with the CPRI, and transmits and receives the RF signal to and from another one of the monitoring controllers (MDE 200).

### (6) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, in the above-described embodiment of the present invention, the description is given with the 3G and the LTE as examples. The used radio communication systems are not limited to these and a GSM and the LTE may be used.

The functions of the BRE 30 may be implemented by hardware or a software module implemented by a processor. Alternatively, the functions may be implemented by a combination of hardware and software.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2009-298417 (filed on December 28, 2009) is incorporated herein by reference.

### INDUSTRIAL APPLICABILITY

The present invention can provide a radio equipment device sharing device capable of allowing plural monitoring controllers (RECs) in different communication systems to monitor the state of a radio equipment (RE) device even in a case where the radio equipment (RE) device is shared by the RECs, and where the radio equipment device sharing device transmits and receives, to and from one of the RECs, a digital signal in accordance with a standardized interface specification for connecting the RE and the REC, and transmits and receives an RF signal to and from another one of the RECs, and thus is useful in radio communications and the like.

### EXPLANATION OF THE REFERENCE NUMERALS

- 10: radio base station system
- 20: mobile station
- 30: BRE
- 50: radio unit
- 100: sharing unit
- 101: relay processing unit
- 103: 3G RF-INF
- 105: TRX-IF
- 107: sector monitoring unit
- 110: PORT-INF
- 111: relay control unit
- 113₁ to 113₆: relays
- 115: connector
- 300: BDE
- 200: MDE
- C: cover area
- RS: radio signal
- S: sector

## Claims

1. A radio equipment device sharing device comprising a radio unit configured to transmit and receive a radio signal to and from a mobile station, wherein
the radio equipment device sharing device is connected to:
a first monitoring controller configured to monitor and control the radio unit in accordance with a first radio communication system; and
a second monitoring controller configured to monitor and control the radio unit in accordance with a second radio communication system different from the first radio communication system,
an RF interface for transmitting and receiving an RF signal that is a signal in a radio frequency band is used for communication between the radio equipment device sharing device and the first monitoring controller, whereas a digital signal interface for transmitting and receiving a digital signal in accordance with a standardized interface specification for connecting a radio equipment device and the second monitoring controller is used for communication between the radio equipment device sharing device and the second monitoring controller,
the radio equipment device sharing device relays the RF signal transmitted and to be received by the first monitoring controller and the digital signal transmitted and to be received by the second monitoring controller,
the radio equipment device sharing device comprises a monitoring signal interface configured to notify the first monitoring controller of a monitoring signal indicating a state of the radio unit, and
the signal transmitted and received through the monitoring signal interface is of a type different from types of signals transmitted and received by the RF interface and the digital signal interface.

2. The radio equipment device sharing device according to claim 1, wherein the signal transmitted and received through the monitoring signal interface is a ground signal.

3. The radio equipment device sharing device according to claim 1, wherein a radio frequency band used in the first radio communication system overlaps with a radio frequency band used in the second radio communication method.

4. The radio equipment device sharing device according to claim 3, wherein the monitoring signal is a signal indicating a state of a sector formed by the radio unit.
